# EUROPÄISCHE PATENTSCHRIFT

(11) **EP 3 891 386 B1**
(45) Veröffentlichungstag und Bekanntmachung des Hinweises auf die Patenterteilung: **13.09.2023**
(21) Anmeldenummer: 19808573.0
(22) Anmeldetag: 21.11.2019
(51) Int. Cl.: F03D 13/20, E04H 12/16

(54) **VERFAHREN ZUM VORSPANNEN EINES TURMS EINER WINDENERGIEANLAGE**
METHOD FOR PRETENSIONING A TOWER OF A WIND POWER PLANT
PROCÉDÉ POUR RÉALISER UN PRÉSERRAGE DU MÂT D'UNE ÉOLIENNE

(30) Priorität: 07.12.2018 DE 102018131443
(43) Veröffentlichungstag der Anmeldung: 13.10.2021
(73) Patentinhaber: Wobben Properties GmbH, 26607 Aurich (DE)
(72) Erfinder: KERSTEN, Roy, 39291 Hohenwarthe (DE)
(74) Vertreter: Eisenführ Speiser
(86) Internationale Anmeldenummer: PCT/EP2019/082025
(87) Internationale Veröffentlichungsnummer: WO 2020/114789

(56) Entgegenhaltungen:
- EP-A1- 2 035 699
- WO-A1-2014/033332
- CN-U- 204 024 188
- US-A1- 2018 238 071

## Beschreibung

Die Erfindung betrifft ein Verfahren zum Vorspannen eines Turms einer Windenergieanlage.

Spannbetonbauwerke, insbesondere im Bereich der Spannbetontürme, wie zum Beispiel ein Turm einer Windenergieanlage, werden mit Spannelementen durch Aufbringen einer Zugkraft verspannt und versteift. Türme umfassen oftmals eine Anzahl von zusammengesetzten Turmsegmenten. Hierbei können ein einzelnes Turmsegment oder ein erstes und ein zweites Turmsegment oder die Anzahl von Turmsegmenten für sich allein oder untereinander unter Zugspannung versetzt werden. Hierzu werden die Spannelemente entsprechend am Turm, zum Beispiel am Turmfuß oder Fundament und an der Turmwandung verankert, um den Turm über die Höhe vorzuspannen. Die Spannelemente können in der Turmwandung verlaufen, was auch als interne Vorspannung bezeichnet wird. Hierzu werden beim Betonieren meist leere Hülsen einbetoniert, durch die später die Spannelemente gezogen werden. Alternativ können die Spannglieder auch außerhalb der Turmwandung, beispielsweise auf der Turminnenseite, verlaufen, was auch als externe Vorspannung bezeichnet wird. Die Verankerung der Spannelemente kann beispielsweise über einen Festanker und einen Spannanker erfolgen.

Aus DE 100 31 683 A1 ist beispielsweise ein Spannbetonturm für eine Windenergieanlage mit einem Fundament, einem im Wesentlichen aus Beton bestehenden Turm und mindestens einem seilartigen Spannstahlelement zum Verspannen des Turms bekannt.

Hierbei ist vorgesehen, dass das Spannstahlelement mittels an dem Turm angeordneter Spanntaschen fixiert ist.

DE 10 2013 211 750 A1 offenbart eine Windenergieanlage mit einem Fundament und einem Turm, wobei das Fundament eine Fundamentplatte und einem Fundamentsockel auf der Fundamentplatte aufweist. Hierbei ist ein Spannlitzenanschluss mit einer Mehrzahl von Bohrungen zur Aufnahme von Spannlitzen an dem Fundamentsockel vorgesehen, wobei die Spannlitzen an einer Unterseite des Anschlusses mittels eines Spannlitzenkopfes verspannt sind. Die Fundamentplatte und der Fundamentsockel sind aus Beton gegossen.

In DE 10 2015 216 444 A1 ist eine Windenergieanlage mit einem Fundament einen Stahlturm mit einer Mehrzahl von Turmsegmenten und mehreren Spannelement offenbart. Ein unteres Ende der Spannelemente ist hierbei mittels einer Befestigungseinheit in oder unter einem ersten Fundamentabschnitt befestigt. Die Spannelemente sind an einem oberen Ende mittels einer Befestigungseinheit in oder unter einem ersten Fundamentabschnitt befestigt. Ein oberes Ende der Spannelemente ragt über ein oberes Ende des Betonfundamentsockels hinaus und verläuft durch die Durchgangsköcher. Die oberen Enden der Spannelemente werden mittels Befestigungseinheiten verspannt. Eine Außenseite des Betonfundamentsockels ist konisch ausgestaltet.

DE 10 2013 226 536 betrifft eine Anordnung mit einem Betonfundament und einem Turm zum Tragen einer Gondel einer Windenergieanlage, wobei der Turm eine Anzahl von Turmsegmenten umfasst, die entlang einer Turmachse angeordnet sind und zumindest ein oberstes Turmsegment einen Kopfflansch und einen Fußflansch umfasst, wobei ein oberstes Turmsegment der Anzahl von Turmsegmenten als ein Stahlelement gebildet ist; und eine Anzahl von Spann- oder Zuglitzen das Betonfundament mit dem Kopfflansch des obersten Turmsegmentes unter Zugspannung verspannt.

In der DE 10 2013 225 128 ist eine Windenergieanlage mit einem Fundament und einem auf dem Fundament platzierten Turm mit einer Mehrzahl von Turmsegmenten offenbart. Das Fundament weist hierbei einen Turmsockel auf, welcher zumindest teilweise in dem Fundament vergossen ist. Hierbei ist vorgesehen, dass der Turmsockel mindestens zwei Segmente aufweist und ein unteres Turmsegment des Turms zusammen mit den Segmenten des Turmsockels insbesondere über Spannstangen verspannt ist.

### Geänderte Beschreibungsseiten (Reinschrift)

Existierende Lösungen ermöglichen eine gute Vorspannung von Spannelementen, insbesondere von Türmen von Windenergieanlagen, sind allerdings häufig teure und aufwändige Konstruktionen und von einer hohen technologischen Komplexität.

Hinzukommen in der Regel hohe Herstellungs-, Montage und Wartungskosten. Insbesondere eine interne Vorspannung lässt sich häufig nicht oder nur mittels kostenintensiver technischer Mittel sowie einem relativen hohen Personal- und Zeiteinsatz anpassen und/oder korrigieren.

Das Deutsche Patent- und Markenamt hat in der Prioritätsanmeldung zu vorliegender Anmeldung folgenden Stand der Technik recherchiert: WO 2018/ 108 818 A1.

US 2018/238071 A1 offenbart ein System und ein Verfahren zum Installieren eines Vorspannglieds in einem Geräteturm. CN 204 024 188 U offenbart eine externe Spannanker-Bündel-Ausgleichsschraube-Streck-Zieh-Anker-Vorrichtung für einen Betonturm. Die Vorrichtung umfasst ein externes Spannanker-Bündel, eine Ausgleichsschraube und eine flache Verbindungsplatte.

Der Erfindung liegt daher die Aufgabe zu Grunde, wenigstens eines der genannten Probleme zu adressieren. Insbesondere ist es eine Aufgabe der vorliegenden Erfindung eine Lösung bereitzustellen, die eine zuverlässige und/oder kostengünstige Vorspannung eines Spannbetonbauwerks, insbesondere eines Turms einer Windenergieanlage, ermöglicht. Ferner ist es insbesondere eine Aufgabe der vorliegenden Erfindung, eine Vorspannung eines Spannbetonbauwerks, insbesondere eines Turms einer Windenergieanlage, mittels einfach herstellbarer und/oder einfach montierbarer und/oder einfach austauschbarer Mittel zu gewährleisten. Zumindest soll zu bisher bekannten Lösungen eine alternative Lösung gefunden werden.

Diese Aufgabe wird gelöst durch ein Verfahren gemäß Anspruch 1. Vorteilhafte Ausgestaltungen sind in den Unteransprüchen beschrieben.

Gemäß einem ersten Aspekt wird beschrieben eine Fundamentanordnung für einen Turm einer Windenergieanlage, umfassend ein Fundament mit einem Ankerabschnitt und einem Tragabschnitt zum Tragen einer Turmwandung sowie ein Adapterelement mit einer Befestigungseinrichtung zur Befestigung eines unteren Endes eines Spannelements zur Vorspannung eines Turms für eine Windenergieanlage, und mit einer Anschlusseinrichtung zum Anschließen des Adapterelements an den Ankerabschnitt des Fundaments.

Der Erfindung liegt die Erkenntnis zugrunde, dass in existierenden Lösungen zum Verankern und/oder Vorspannen am Fundament meist ein Fundamentkeller unterhalb des Fundaments ausgebildet wird, um die gespannten Spannglieder beispielsweise mittels eines Spannanker an beispielsweise einer Decke des Fundamentkellers zu befestigen. Typischerweise werden die Spannglieder durch eine entsprechende Öffnung in der Kellerdecke durchgeführt, von einer hydraulischen Stempelvorrichtung gespannt und sodann mittels des Spannankers gegen die Decke befestigt. Hierbei kann eine zuverlässige Vorspannung erreicht werden. Diese geht jedoch mit hohen Montagekosten sowie einem großen Arbeitsaufwand einher.

In der hier beschriebenen Lösung dient das Adapterelement zur Vorspannung und/oder Verankerung von Spannelementen des Turms der Windenergieanlage, insbesondere zum Aufbringen einer externen und/oder internen Spannkraft auf den Turm der Windenergieanlage. Hierzu weist das Adapterelement eine Befestigungseinrichtung auf, an welcher das untere Ende des Spannelements befestigt und vorzugsweise verspannt und/oder verankert werden kann. Ein oberes Ende des Spannelements kann vorzugsweise an einem oberen Ende eines Windenergieanlagen-Turms befestigt und vorzugsweise verankert werden. Das Verspannen des Spannelements kann vorzugsweise am unteren und/oder oberen Ende des Windenergieanlagen-Turms erfolgen. Hierzu kann beispielsweise ein Spannwerkzeug an einem Ende des Spannelements angesetzt werden.

Das Adapterelement ist vorzugsweise auf dem Ankerabschnitt des Fundaments anordenbar und mittels einer Anschlusseinrichtung an dem Ankerabschnitt des Fundaments vorzugsweise ortsfest befestigbar. Hierbei ist der Ankerabschnitt ausgebildet, um mit der Anschlusseinrichtung des Adapterelements zusammenzuwirken. Der Ankerabschnitt kann insbesondere als ein Teil der Oberseite des Fundaments ausgebildet sein und sich vorzugsweise von der Oberseite des Fundaments in das Innere des Fundaments erstrecken. Vorzugsweise kann das Adapterelement auf dem Ankerabschnitt angeordnet werden, so dass eine Verankerung und/oder Verspannung der Spannelemente vorzugsweise auf oder oberhalb einer Oberseite des Fundaments erfolgen und ein Fundamentkeller entfallen kann.

Darüber hinaus weist das Fundament vorzugswese einen Tragabschnitt auf, der als eine Aufstandsfläche für eine Turmwandung ausgebildet ist. Insbesondere kann der Tragabschnitt ausgebildet sein, um ein unteres Turmsegment aufzunehmen und zu befestigen. Vorzugsweise kann eine Turmwandung oder ein unteres Turmsegment auf dem Tragabschnitt angeordnet werden, Der Tragabschnitt kann insbesondere als ein Teil der Oberseite des Fundaments ausgebildet sein und sich vorzugsweise von der Oberseite des Fundaments in das Innere des Fundaments erstrecken.

Fundamentanordnungen mit einem Fundament und einem Adapterelement zum Vorspannen eines Windenergieanlagen-Turms deutlich kostengünstiger hergestellt und/oder montiert werden können, als bekannte Lösungen zum Vorspannen eines Windenergieanlagen-Turms, wie zum Beispiel mit einem Fundamentkeller. Mithin können Fundamente flacher ausgestaltet und dadurch Materialkosten eingespart werden. Ferner können durch derartige Adapterelemente Windenergieanlagentürme auch insgesamt kostengünstiger und/oder mit höherer Zuverlässigkeit verspannt werden.

Das Adapterelement kann vorzugsweise in dem Inneren des Windenergieanlagen-Turms angeordnet werden. In dieser Ausgestaltung sind Adapterelemente vorzugsweise an einer Außenumfangsfläche des Turms nicht sichtbar. Ferner ermöglicht die Anordnung von vorzugsweise individuellen Adapterelementen eine größere Flexibilität hinsichtlich der Innenraumgestaltung im Turm. Beispielsweise können bestimmte Bereiche der Fundamentoberfläche im Turminneren freigehalten werden für Einbauten, wie beispielsweise Leitungen, Aufstiegshilfen oder dergleichen.

Alternativ kann das Adapterelement vorzugsweise außerhalb des Turms angeordnet werden, um von außen zugänglich zu sein. Auch eine Kombination von Adapterelementen außerhalb und innerhalb der Turmwandung kann bevorzugt sein.

Ein weiterer Vorteil der Fundamentanordnung mit dem an dem Ankerabschnitt des Fundaments befestigten Adapterelement ist, dass ein Fundament geringerer Komplexität eingesetzt werden kann, was den technologischen Aufwand und den Kostenaufwand der Herstellung des Fundaments reduziert. Ferner können sowohl die Wartung als auch die Instandhaltung der Vorspannung des Windenergieanlagen-Turms erleichtert werden.

Vorteilhaft ist ferner, dass bereits sich im Betrieb befindliche Windenergieanlagen-Türme sowohl mit einer internen und/oder externen Vorspannung mit dem Adapterelement nachgerüstet werden können. Insbesondere können auch Windenergieanlagen-Türme mit einer beispielsweise beschädigten und/oder einer für eine veränderte Belastungssituation nicht ausreichenden Anzahl an Spannelementen mit dem Adapterelement und weiteren Spannelementen nachgerüstet und so weiter betrieben werden.

Das Fundament kann vorzugsweise in einen Bodenaushub eingelassen sein, wobei insbesondere bevorzugt die Fundamentoberseite im Wesentlichen auf einem Bodenniveau liegt und vorzugsweise eben und/oder zumindest nicht gekrümmt ausgebildet ist. Vorzugsweise kann das Fundament zumindest einen erhöhten Abschnitt, dessen Oberseite oberhalb des Bodenniveaus liegt, und/oder zumindest einen niedrigeren Abschnitt, dessen Oberseite unterhalb des Bodenniveaus liegt, aufweisen. Der Tragabschnitt kann insbesondere bevorzugt von dem Ankerabschnitt beabstandet oder an diesen angrenzend ausgebildet sein. Insbesondere bevorzugt können der Tragabschnitt und der Ankerabschnitt von einer vertikalen Längsachse des Windenergieanlagen-Turms unterschiedlich beabstandet sein. Vorzugsweise kann der Ankerabschnitt in radialer Richtung einen größeren und/oder kleineren Abstand zur vertikalen Längsachse des Windenergieanlagen-Turms aufweisen als der Tragabschnitt. Das Adapterelement kann also im Vergleich zur Turmwandung weiter innen und/oder weiter außen angeordnet sein.

Vorzugsweise kann der Tragabschnitt ringförmig, insbesondere bevorzugt an eine Form der Turmwandung des Windenergieanlage-Turms angepasst, sein. Windenergieanlagen-Türme weisen in der Regel einen ringförmigen Querschnitt orthogonal zu der vertikalen Längsachse auf. Dieser ringförmige Querschnitt kann kreisringförmig ausgebildet sein oder auch eine polygonale Form aufweisen. Unter dem Begriff ringförmig ist daher vorliegend nicht nur eine kreisringförmige Ausgestaltung zu verstehen, sondern auch eine polygonale und/oder mehreckige Ausgestaltung mit mehreren geraden Abschnitten. Der Ankerabschnitt kann also insbesondere innerhalb des in sich geschlossenen, umlaufenden Tragabschnitts und/oder außerhalb des in sich geschlossenen, umlaufenden Tragabschnitts ausgebildet sein.

Das Adapterelement kann vorzugsweise auf dem Ankerabschnitt, also auf der Oberseite des Fundaments, angeordnet und befestigt sein. Die Befestigung des Adapterelements an dem Ankerabschnitt kann beispielsweise mittels einer Klebe- bzw. Verbinderschicht erfolgen.

Die Unterseite des Adapterelements kann sich vorzugsweise in ein Inneres des Ankerabschnitts, also in ein Inneres des Fundaments, erstrecken und dort befestigt, insbesondere einbetoniert, sein.

Alternativ hierzu kann die Unterseite des Adapterelements auch auf einem Abstandshalter angeordnet und vorzugsweise befestigt sein, wobei vorzugsweise der Abstandshalter auf dem Ankerabschnitt angeordnet und vorzugweise befestigt ist. Insbesondere bevorzugt kann das Adapterelement auf dem Abstandshalter sowie der Abstandshalter auf dem Ankerabschnitt lösbar befestigt sein. Beispielsweise kann der Abstandshalter auf dem Ankerabschnitt angeordnet und vorzugsweise mittels einer Gewichtskraft des Adapterelements befestigt sein. Der Abstandshalter kann als zwei, drei oder mehrere voneinander beabstandete, vorzugsweise gleichmäßig voneinander beabstandete, Hocker oder ein in sich geschlossener Ring, insbesondere an eine Form die Unterseite des Adapterelements angepasst, ausgebildet sein.

Vorzugsweise können zwei, drei oder mehrere Spannelemente vorgesehen sein, die vorzugsweise parallel zu einer Richtung, vorzugsweise parallel zu einer Längsachse des Windenergieanlagen-Turms, verlaufen. Die Spannelemente können auch zur Längsachse des Windenergieanlagenturms geneigt sein. Vorzugsweise entspricht ein Neigungswinkel eines Spannelements dem Neigungswinkel des Windenergieanlagen-Turms, insbesondere einer inneren und/oder äußeren Seite der Wandung des Windenergieanlagen-Turms. Ferner kann das Spannelement vorzugsweise unterschiedliche Neigungswinkel aufweisen.

Spannelemente sind vorzugsweise aus Stahl oder aus einem Stahl umfassenden Material gebildet. Insbesondere bevorzugt können Spannelemente aus Fasern bestehen oder Fasern umfassen, insbesondere Stahlfasern und/oder Kohlenstofffasern und/oder Aramidfasern und/oder Keramikfasern und/oder Naturfasern und/oder Glasfasern und/oder dgl. Spannelemente können beispielsweise Stangen umfassen und/oder stangenförmig ausgebildet sein. Spannelemente können Seile umfassen oder seilförmig ausgebildet sein. Spannelemente können Einlagen und/oder Litzen umfassen, wobei eine Litze vorzugsweise mehrere Drähte umfasst. Bevorzugt ist die Einlage von Litzen und/oder Drähten eingefasst. Ein Material der Einlage kann Kunststoff und/oder Stahl und/oder Natur- und/oder Kunstfasern umfassen, wobei die Einlage bevorzugt drahtartig und/oder seilartig und/oder stabartig und/oder faserartig und/oder stangenartig ausgebildet ist.

Die Befestigungseinrichtung ist zum Befestigen des Spannelements, insbesondere zum Befestigen eines Anschlusskopfes, vorzugsweise in Form eines Keils, des Spannelements, ausgebildet. Die Befestigungseinrichtung ist vorzugsweise ausgebildet, um mit dem Spannelement vorzugsweise lösbar und/oder vorzugsweise vorgespannt verbunden zu werden. Das Spannelement ist vorzugsweise ausgebildet, um mit dem Anschlusskopf, insbesondere dem Keil, in der Befestigungseinrichtung vorzugsweise befestigt und/oder vorzugsweise vorgespannt verbunden zu werden. Hierbei kann der Anschlusskopf vorzugsweise mittels eines Ankers innerhalb der Befestigungseinrichtung vorzugsweise befestigt und/oder vorzugsweise vorgespannt verbunden zu werden.

Vorzugsweise weist das Adapterelement zwei, drei oder mehrere Spannelemente und/oder zwei, drei oder mehrere Befestigungseinrichtungen auf. Vorzugsweise ist die Anzahl der Spannelemente gleich der Anzahl der Befestigungseinrichtungen. Insbesondere bevorzugt sind zwei, drei oder mehrere Adapterelemente auf dem Ankerabschnitt und/oder auf zwei, drei oder mehreren Ankerabschnitten angeordnet, wobei vorzugsweise die Adapterelemente äquidistant, insbesondere in Umfangsrichtung, voneinander beabstandet, angeordnet sind.

Das Vorspannen, insbesondere das Aufbringen einer Zugkraft, beispielsweise durch Spannelemente, kann auch als Verspannen bezeichnet werden. In der vorliegenden Anmeldung können die beiden Begriffe "Vorspannen" und "Verspannen" (und daraus abgeleitete Begriffspaare wie Vorspannung/Verspannung, vorgespannt/verspannt etc.) daher vorzugsweise als austauschbar und/oder synonym verstanden werden. Das Ermöglichen eines Aufbringens einer Zugkraft kann auch als Verankerung bezeichnet werden, Auch der Begriff "verankern" oder "Verankerung" kann hierin daher synonym verstanden werden.

Sofern auf die Anordnung des Adapterelements in Relation zu dem Windenergieanlagen-Turm Bezug genommen wird, beziehen sich Richtungsangeben, wie beispielsweise radial, in Umfangsrichtung, etc. vorzugsweise auf einen Turm, insbesondere auf eine im Wesentlichen vertikale Längsachse eines Turms, und beziehen sich auf jegliche Querschnittsformen eines solchen Turms, insbesondere sowohl auf kreisförmige Querschnitte als auch auf polygonale Querschnitte. Ferner vorzugsweise beziehen sich auch Angaben wie horizontal, vertikal, unten, oben, etc. ebenfalls auf einen Einbauzustand eines Windenergieanlagen-Turms. So bilden in der Regel das Fundament ein unteres Ende und eine Gondel ein oberes Ende eines Windenergieanlagen-Turms im Einbauzustand.

Die Erfindung ist nicht auf den Einsatz bei Windenergieanlage-Türmen beschränkt, auch wenn sie hier besonders vorteilhaft und auf wirtschaftliche Art und Weise eingesetzt werden kann. Vielmehr kann eine hier beschriebene Fundamentanordnung zum Vorspannen auch bei ähnlichen Belastungssituationen anderer Bauwerke, insbesondere Türmen anderer Art, eingesetzt werden.

In einer besonders bevorzugten Ausführungsvariante der Fundamentanordnung ist vorgesehen, dass das Adapterelement ringförmig ausgebildet ist. Hierbei kann vorzugsweise ein Querschnitt der durch den, vorzugsweise in sich geschlossenen, Ring definierten Öffnung die Befestigungseinrichtung definieren. Vorzugsweise kann das Spannelement durch die Öffnung des Rings hindurchgeführt und mittels eines Ankers, dessen Abmessungen größer sind als die Abmessungen des Querschnitts der Öffnung des Rings, befestigt werden. Insbesondere bevorzugt kann das Adapterelement als ein Segmentring bestehend aus zumindest zwei Ringsegmenten ausgebildet sein. Diese zumindest zwei Segmentringe können vorzugsweise bei der Montage derart zusammengesetzt werden, dass das untere Ende des Spannelements leicht eingebracht und befestigt werden kann. Die Ausgestaltung des Adapterelements aus zumindest zwei Ringsegmenten ist insbesondere dahingehend vorteilhaft, dass die Ringsegmente vorzugsweise einfach herstellbar und/oder einfach transportierbar und/oder anordenbar sind und dadurch vorzugsweise auch eine einfache Befestigung und Verspannung der Spannelemente gewährleistet werden kann.

Das Adapterelement kann vorzugsweise als ein Zylinder, Pyramidenstumpf, Kegelstumpf oder dergleichen ausgebildet sein. Hierbei ist besonders bevorzugt, dass das Adapterelement auf der Oberseite des Ankerabschnitts angeordnet und befestigt werden kann. Vorzugsweise kann das Adapterelement eine Seitenwand, die vorzugsweise eine Mantelfläche bildet, aufweisen, die sich von der Unterseite des Adapterelements zu der Oberseite des Adapterelements erstreckt und einen, vorzugsweise an der Oberseite des Adapterelements, von der Seitenwand vorzugsweise radial nach innen vorstehenden Kragen umfasst. Der Kragen kann sich vorzugsweise im Wesentlichen orthogonal von der Oberseite des Adapterelements erstrecken und einen Vorsprung bilden. Vorzugsweise kann hierbei eine Höhe einer Seitenwand größer sein als eine Höhe des Kragens, insbesondere bevorzugt kann die Höhe der Seitenwand größer als die Höhe des Kragens und kleiner als eine doppelte Höhe des Kragens sein. Vorzugsweise kann die Höhe der Seitenwand zumindest doppelt, dreifach oder vierfach so groß sein als die Höhe des Kragens. Die Ausgestaltung der Seitenwand und des Kragen können vorzugsweise einen Hohlraum definieren, der die Befestigungseinrichtung definiert.

Alternativ kann es insbesondere bevorzugt sein, dass sich das Adapterelement von seiner Unterseite bis zu seiner Oberseite im Wesentlichen stabförmig erstreckt. Vorzugsweise kann an der Oberseite des stabförmigen Grundkörpers eine Konsole ausbildet sein, die sich vorzugsweise von dem stabförmigen Grundkörper bis zu ihrer Stirnseite erstreckt. Vorzugsweise kann sich der stabförmige Grundkörper orthogonal zu der Oberfläche des Fundaments bzw. des Ankerabschnitts erstrecken. Die Konsole kann sich vorzugsweise orthogonal zu dem stabförmigen Grundkörper erstrecken. Die Befestigungseinrichtung kann vorzugsweise durch eine Ausnehmung, vorzugsweise einen Durchgang, die vorzugsweise innerhalb des stabförmigen Grundkörpers und/oder der Konsole ausgebildet ist, ausgebildet sein. Ferner kann die Befestigungseinrichtung durch einen Zwischenraum zwischen einer ersten Konsole, vorzugsweise der Stirnseite der ersten Konsole, eines ersten stabförmigen Adapterelements und einer zweiten Konsole, vorzugsweise der Stirnseite der zweiten Konsole, eines von dem ersten stabförmigen Adapterelements beabstandet angeordneten zweiten stabförmigen Adapterelements definiert sein.

Gemäß einer weiter bevorzugten Ausführungsvariante ist vorgesehen, dass sich die Befestigungseinrichtung im Wesentlichen in vertikaler Richtung von einer Oberseite des Adapterelements durch das Adapterelement und/oder in ein Inneres des Adapterelements erstreckt. Vorzugsweise kann sich die Befestigungseinrichtung demnach orthogonal zur Oberseite des Adapterelements und/oder zur Unterseite des Adapterelements erstrecken. Insbesondere bevorzugt kann hierbei die Befestigungseinrichtung als eine Ausnehmung, insbesondere als eine Durchgangsöffnung ausgebildet sein.

Vorzugsweise kann die Befestigungseinrichtung durch gegebenenfalls den Hohlraum und/oder gegebenenfalls den Zwischenraum und/oder die Ausnehmung definiert sein.

Vorzugsweise kann ein erster Befestigungsabschnitt einen Durchgang von der Oberseite des Adapterelements zu einem zweiten Befestigungsabschnitt bilden. Der erste Befestigungsabschnitt kann hierbei eine Abmessung aufweisen, um Spannelemente durchzuführen. Der zweite Befestigungsabschnitt kann vorzugsweise entweder in dem Inneren des Adapterelements ausgebildet sein und eine Abmessung aufweisen, die eingerichtet ist, um ein Spannelement vorzugsweise mittels eines Ankers zu befestigen. Alternativ kann der zweite Befestigungsabschnitt vorzugsweise an der Unterseite des Adapterelements ausgebildet sein und das Spannelement vorzugsweise mittels eines Ankers zu befestigen.

Insbesondere ist es bevorzugt, dass sich die Befestigungseinrichtung im Wesentlichen in vertikaler Richtung in ein Inneres des Adapterelements erstreckt.

Weiter bevorzugt ist, dass sich die Befestigungseinrichtung im Wesentlichen in vertikaler Richtung von einer Oberseite des Adapterelements durch das Adapterelement erstreckt.

Gemäß einer weiter bevorzugten Ausgestaltung ist vorgesehen, dass der Ankerabschnitt ein Anschlusselement umfasst das ausgebildet ist, um mit der Anschlusseinrichtung zusammenzuwirken. Hierzu können insbesondere bevorzugt Gewindestangen oder andere Spannglieder in dem Fundament integriert sein, also vorzugsweise in dem Fundament einbetoniert und/oder in dem Fundament verankert sein und vorzugsweise nach oben aus der Oberfläche des Fundaments hervorstehen. Alternativ oder zusätzlich kann vorzugsweise ein Fundamentkorb in dem Fundament integriert sein und die Gewindestanden oder die anderen Spannglieder umfassen, um das Adapterelement an den Fundamentkorb anzubinden. Die Gewindestanden oder die anderen Spannglieder können vorzugsweise durch die Anschlusseinrichtung, die vorzugsweise als ein Durchgang von der Unterseite des Adapterelements zu der Oberseite des Adapterelements ausgebildet ist, durchgezogen werden und vorzugsweise an der Oberseite des Adapterelements befestigt und/oder vorzugsweise verschraubt werden. Durch diese Ausgestaltung kann das Adapterelement besonders einfach und kostengünstig an dem Fundament angeschlossen werden und insbesondere sicher gegen beispielsweise Verschiebungen gesichert werden. Ein besonders zuverlässiger Anschluss des Adapterelements an dem Ankerabschnitt spielt insbesondere bei der Verspannung des Windenergieanlagen-Turms eine entscheidende Rolle. Insbesondere kann hierdurch das Fundament deutlich flacher ausgebildet werden. Ein weiterer Vorteil liegt darin, dass die Ausbildung des Fundamentkorbs und/oder der im Fundament integrierten Gewindestanden oder anderen Spanngliedern an einen Bereich des Ankerabschnitts angepasst werden kann.

Besonders bevorzugt kann die Anschlusseinrichtung an der Seitenwand bzw. dem stabförmigen Grundkörper des Adapterelements ausgebildet sein und sich vorzugsweise von der Unterseite bis zu der Oberseite des Adapterelements erstrecken. Hierbei kann die Anschlusseinrichtung vorzugsweise eingerichtet sein, um mit dem Ankerabschnitt zusammenzuwirken und das Adapterelement vorzugsweise ortsfest an dem Fundament zu befestigen.

Ferner ist es bevorzugt, dass das Adapterelement zwei, drei oder mehrere Anschlusseinrichtungen aufweist. Hierdurch wird eine besonders zuverlässige ortsfeste Befestigung des Adapterelements an dem Ankerabschnitt gewährleistet und aufgrund auftretender Kräfte gegen ungewolltes Verschieben gesichert.

Gemäß einer weiter bevorzugten Ausführungsvariante ist vorgesehen, dass der Ankerabschnitt ein, zwei, drei oder mehrere Anschlusselemente umfasst, die ausgebildet sind, um mit der Anschlusseinrichtung zusammenzuwirken. Vorzugsweise können ein, zwei, drei oder mehrere Anschlusselemente pro Anschlusseinrichtung vorgesehen sein. Hierdurch kann das Adapterelement besonders zuverlässig am Ankerabschnitt befestigt werden und/oder gegebenenfalls kann hierdurch das Spannelement mittels des Adapterelements vorgespannt werden.

Gemäß einer bevorzugten Ausführungsvariante umfasst das Fundament Stahlbeton und/oder Spannbeton oder besteht ganz oder teilweise aus Stahlbeton und/oder Spannbeton.

Ferner ist es bevorzugt, dass das Adapterelement Stahlbeton und/oder Spannbeton umfasst oder ganz oder teilweise aus Stahlbeton und/oder Spannbeton besteht. Besonders bevorzugt ist es, dass das Adapterelement aus Stahl oder als Stahlbeton- und/oder Spannbeton-Fertigteil ausgebildet ist.

Gemäß einer weiter bevorzugten Ausführungsvariante ist ein erster lichter Abstand zwischen einer Unterseite der Befestigungseinrichtung und dem Ankerabschnitt derart bemessen, dass dort ein Anker des Spannelements anordenbar ist und/oder ein zweiter lichter Abstand zwischen einer Unterseite des Adapterelements und dem Ankerabschnitt derart bemessen ist, dass dort ein Anker des Spannelements und/oder ein Spannwerkzeug zum Spannen des Spannelements anordenbar ist.

Zum Verspannen eines Bauwerks insbesondere eines Turms einer Windenergieanlage werden vorzugsweise ein Spannanker und/oder ein Festanker verwendet. Der Spannanker kann vorzugsweise über einen oder mehrere Spannelemente mit dem Festanker an einer anderen Stelle des Bauwerks in Verbindung stehen und kann vorzugsweise durch Aufbringen von Zugspannung zwischen dem Spannanker und dem Festanker die Zugspannung auf ein Bauteil oder zwischen Bauteilen eines Bauwerks, wie zum Beispiel zwischen Turmsegmenten eines Turms, insbesondere eines Windenergieanlagen-Turms, erzeugen. Hierzu kann ein Spannanker Angriffsmittel zum Ansetzen des Spannwerkzeugs aufweisen und ist insbesondere ausgebildet, um einen Zugstrang gegen den Spannanker zu bewegen und diesen so unter Zugspannung zu setzen. Im Gegensatz dazu dient ein Festanker vorzugsweise dazu, um einen oder mehrere Zugstränge am Festanker zu halten. Hierzu kann ein Festanker an geeigneter Stelle des Bauwerks festgesetzt sein und bedarf vorzugsweise keiner Funktionsmittel zur Änderung oder Erhöhung einer Zugspannung eines Zugstrangs. Generell können das Verankern und/oder das Vorspannen der Spannglieder mittels des Spannankers vorzugsweise am oberen Ende oder am unteren Ende des Turms erfolgen.

Besonders bevorzugt können der erste lichte Abstand und/oder der zweite lichte Abstand jeweils von der Oberseite des Ankerabschnitts bemessen werden. Ferner ist es bevorzugt, wenn das Spannelement mittels eines Keils in dem Anker befestigbar ist. Durch diese Ausgestaltung wird eine Zugänglichkeit des Festanker und/oder des Spannankers gewährleistet und sowohl die Montage als auch Wartungsarbeiten vereinfacht.

Eine weiter bevorzugte Fortbildung der Fundamentanordnung zeichnet sich durch eine Umlenkeinrichtung zum Umlenken eines Spannelements in Richtung der Befestigungseinrichtung aus. Diese Ausgestaltung ist insbesondere vorteilhaft, wenn eine interne Verspannung und/oder eine externe Verspannung nahe der Turmwandung erfolgen soll.

Vorzugsweise kann die Umlenkeinrichtung eine erste Umlenkeinheit und eine zweite Umlenkeinheit umfassen, wobei vorzugsweise die erste Umlenkeinheit im Wesentlichen in vertikaler Richtung, vorzugsweise zentriert, über der Befestigungseinrichtung angeordnet ist und ausgebildet ist, um ein Spannelement, das in vertikaler Richtung aus dem Adapterelement ragt, umzulenken, sodass sich dieses vorzugsweise im Wesentlichen horizontal in Richtung der Turmwandung erstreckt. Nahe der Turmwandung vorzugsweise an der Turmwandung oder in einem Inneren der Turmwandung vorzugsweise teilweise in dem Inneren der Turmwandung kann vorzugsweise die zweite Umlenkeinheit vorgesehen sein, die ausgebildet ist, um das Spannelement derart umzulenken, dass der Neigungswinkel des Spannelements dem Neigungswinkel des Windenergieanlagen-Turms entspricht und/oder das Spannelement im Wesentlichen parallel zu der Turmwandung verläuft. Durch dieses Ausgestaltung kann das Adapterelement von der Turmwandung beabstandet angeordnet sein und damit Spannelemente weiter innen befestigt und/oder vorgespannt werden, während gleichzeitig die Übertragung der Spannkraft auf die Turmwandung in vorteilhafter Weise in radialer Richtung weiter außen erfolgt. So können beispielsweise ungünstige Kraftleitungen und/oder Momente vermieden oder reduziert werden, die beim externen Verspannen insbesondere aufgrund Beabstandung zu der Turmwandung auftreten können. Dadurch wird ermöglicht, dass Spannen mittels des Adapterelements in einer Vielzahl von Türmen einsetzbar ist, sowohl als einzige oder zusätzliche Spanntechnik bei der Neuerrichtung von Türmen oder beim Nachrüsten von Türmen.

Gemäß einem weiteren Aspekt wird beschrieben ein Adapterelement für eine Fundamentanordnung mit einer Befestigungseinrichtung zur Befestigung eines unteren Ende eines Spannelements zur Vorspannung eines Turms für eine Windenergieanlage, und mit einer Anschlusseinrichtung zum Anschließen des Adapterelements an einem Ankerabschnitt eines Fundaments.

Darüber hinaus wird der Aspekt einer Spannvorrichtung für einen Turm einer Windenergieanlage beschrieben, umfassend ein Adapterelement und/oder eine Fundamentanordnung und ein Spannelement, dessen unteres Ende an der Befestigungseinrichtung befestigt ist und dessen oberes Ende an einem oberen Ende des Turms befestigbar ist.

Vorzugsweise kann durch das Spannen des Spannelements eine Spannkraft auf die Befestigungseinrichtung und/oder über die Befestigungseinrichtung auf das Adapterelement und/oder über das Adapterelement auf das Fundament, insbesondere den Ankerabschnitt, übertragen werden.

Darüber hinaus wird der Aspekt einer Verwendung eines Adapterelements zum Verankern und/oder Vorspannen eines Spannelements und/oder in einer Spannvorrichtung beschrieben.

Gemäß einem weiteren Aspekt wird beschrieben ein Turm für eine Windenergieanlage, umfassend eine Spannvorrichtung und/oder ein Adapterelement und/oder eine Fundamentanordnung, wobei eine Turmwandung auf dem Ankerabschnitt angeordnet ist.

Gemäß einem weiteren Aspekt wird beschrieben eine Windenergieanlage, umfassend einen Turm und/oder einem Adapterelement und/oder einer Fundamentanordnung.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Fundamentanordnung verwiesen.

Gemäß einem weiteren Aspekt wird beschrieben ein Verfahren zur Herstellung einer Fundamentanordnung für eine Windenergieanlage, umfassend die Schritte: Herstellen eines Fundaments mit einem Tragabschnitt und einem Ankerabschnitt sowie Herstellen oder Bereitstellen eines auf dem Ankerabschnitt anordenbaren Adapterelements mit einer Befestigungseinrichtung zur Befestigung eines unteren Endes eine Spannelements zur Vorspannung eines Turms für eine Windenergieanlage, und mit einer Anschlusseinrichtung zum Anschließen des Adapterelements an den Ankerabschnitt des Fundaments.

Vorzugsweise kann das Fundament und das Adapterelement gleichzeitig bzw. kontinuierlich hergestellt bzw. bereitgestellt werden. Insbesondere kann das Fundament vor Ort vorzugsweise aus Ortbeton, insbesondere bevorzugt einstückig, gegossen werden.

Weiter vorzugsweise kann das Adapterelement als ein Fertigteil oder Halbfertigteil bereitgestellt werden und nach dem Gießen und Aushärten des Fundaments auf dem dafür vorgesehenen Ankerabschnitt angeordnet und befestigt werden.

Das Verfahren zur Herstellung einer Fundamentanordnung für eine Windenergieanlage kann vorzugsweise fortgebildet werden durch vorzugsweise Transportieren eines Adapterelements von einer Herstellungsstelle zu einer Montagestelle.

Eine weiter bevorzugte Fortbildung des Verfahrens zeichnet sich dadurch aus, dass das Herstellen eines Fundaments das Bereitstellen von einem Anschlusselement umfasst, das ausgebildet ist, um mit einer Anschlusseinrichtung zusammenzuwirken.

Vorzugsweise kann das Fundament derart ausgebildet werden, dass im Bereich des Ankerabschnitts das Anschlusselement vorzugsweise in Form von Anschlussbewehrung, also Gewindestangen oder andere Spannglieder, aus einem Inneren des Fundaments vorzugsweise im Wesentlichen orthogonal aus einer Oberseite des Fundaments herausragt.

Erfindungsgemäß wird die eingangs genannte Aufgabe gelöst durch ein Verfahren zum Vorspannen eines Turms einer Windenergieanlage, umfassend die Schritte: Bereitstellen einer Spannvorrichtung mit einer Fundamentanordnung und einem Spannelement, Befestigen eines unteren Endes eines Spannelements an einer Befestigungseinrichtung des Adapterelements, Befestigen eines oberen Endes eines Spannelements an einem oberen Ende des Turms sowie Spannen des Spannelements am unteren Ende des Spannelements und/oder am oberen Ende des Spannelements. Vorzugsweise kann das untere Ende des Spannelements durch eine Ausnehmung hindurch gezogen und mittels eines darunterliegenden Spannankers mit Keilen befestigt werden.

Bevorzugt kann vorzugsweise in einem ersten Schritt das obere Ende des Spannelements an dem oberen Ende des Turms befestigt werden und anschließend das Spannelement am unteren Ende des Spannelements befestigt und vorzugsweise gespannt werden. Alternativ hierzu können vorzugsweise in einem ersten Schritt das untere Ende des Spannelements am unteren Ende des Turms befestigt werden und im Anschluss daran das Spannelement am oberen Ende des Turms befestigt und vorzugsweise gespannt werden. Vorzugsweise kann eine Befestigung des unteren und des oberen Endes des Spannelements vorzugsweise zeitgleich bzw. kontinuierlich erfolgen, wobei das Spannen vorzugsweise erst nach Befestigen beider Enden erfolgt.

Ferner ist es bevorzugt, dass das Spannen des Spannelements das Ansetzen eines Spannwerkzeugs an einem oberen Ende des Spannelements angeordneten Spannanker und/oder das Ansetzen eines Spannwerkzeugs an einem unteren Ende des Spannelements angeordneten Spannanker umfasst.

Es kann beispielsweise in einem ersten Schritt oben und/oder unten gespannt werden.

Erfindungsgemäß besteht zwischen dem Ankerabschnitt und dem Adapterelement, insbesondere einer Oberseite des Ankerabschnitts und einer Unterseite des Adapterelements, vor dem Spannen des Spannelements ein lichter Abstand, der nach dem Spannen des Spannelements verkleinert ist. Vorzugsweise kann dieser lichte Abstand gegebenenfalls bis auf null verkleinert werden.

Zwischen dem Ankerabschnitt und dem Adapterelement ist, vorzugsweise temporär, ein Abstandshalter eingesetzt. Eine weitere bevorzugte Fortbildung des Verfahrens zeichnet sich dadurch aus, dass die Verkleinerung des lichten Abstands zwischen dem Ankerabschnitt des Fundaments und dem Adapterelement vorzugsweise mittels der Anschlusselemente und vorzugsweise der Anschlusseinrichtung erfolgt und/oder eine Höhe des Abstandshalters vorzugsweise variabel ist und/oder der Abstandshalter vorzugsweise vor dem Spannen des Spannelements entfernt wird.

Die hier beschriebenen Verfahren und ihre möglichen Fortbildungen weisen Merkmale bzw. Verfahrensschritte auf, die sie insbesondere dafür geeignet machen, für eine hier beschriebene Fundamentanordnung und ihre Fortbildungen sowie für ein Adapterelement, eine Spannvorrichtung, einen Windenergieanlagenturm und eine Windenergieanlage verwendet zu werden. Für weitere Vorteile, Ausführungsvarianten und Ausführungsdetails dieserweiteren Aspekte und ihrer möglichen Fortbildungen wird auch auf die Beschreibung zu den entsprechenden Merkmalen und Fortbildungen der anderen Aspekte verwiesen.

Bevorzugte Ausführungsbeispiele werden beispielhaft anhand der beiliegenden Figuren erläutert. Es zeigen:
- Fig. 1: eine dreidimensionale Ansicht einer Windenergieanlage mit einem Turm und einer Gondel;
- Fig. 2: eine Schnittdarstellung einer Fundamentanordnung gemäß einer ersten Ausführungsvariante;
- Fig. 3: eine Schnittdarstellung einer Fundamentanordnung gemäß einer zweiten Ausführungsvariante;
- Fig. 4: eine Schnittdarstellung einer Fundamentanordnung gemäß einer dritten Ausführungsvariante;
- Fig. 5: eine schematische Draufsicht einer Fundamentanordnung gemäß einer ersten Variante zur Anordnung von Adapterelementen;
- Fig. 6: eine schematische Draufsicht einer Fundamentanordnung gemäß einer zweiten Variante zur Anordnung von Adapterelementen;

In den Figuren sind gleiche oder im Wesentlichen funktionsgleiche bzw. -ähnliche Elemente mit den gleichen Bezugszeichen bezeichnet.

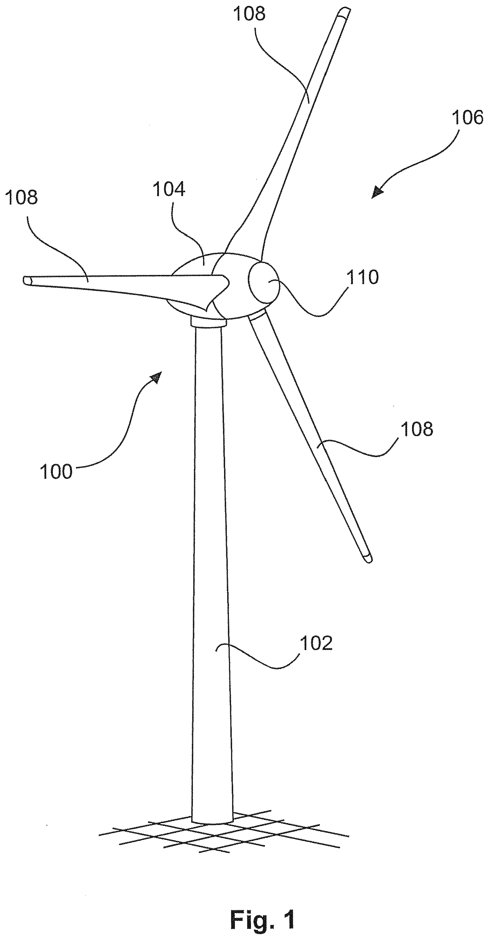

Fig. 1 zeigt eine schematische, dreidimensionale Ansicht einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden. Der Turm 102 der Windenergieanlage 100 weist eine Fundamentanordnung als Teil eines Spannsystems wie hierin beschrieben auf.

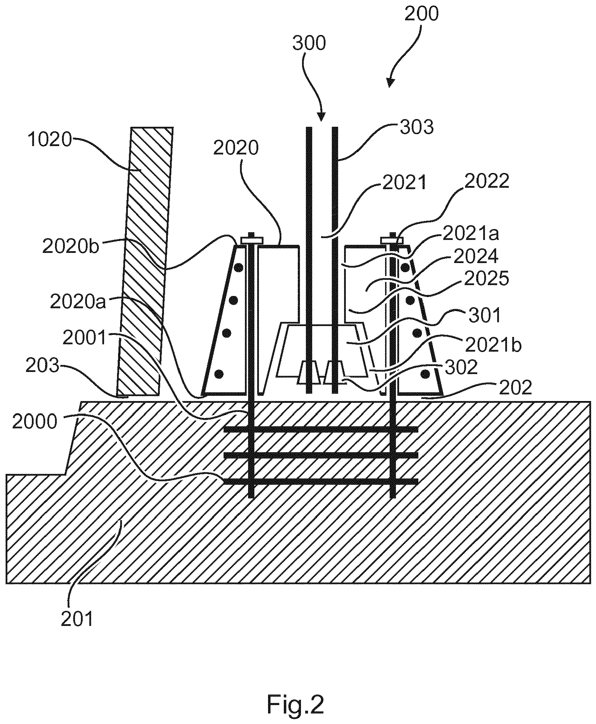

Die Figuren 2, 3 und 4 zeigen eine Fundamentanordnung 200 für einen Windenergieanlagen-Turm mit einem Fundament 201, das einen Ankerabschnitt 202 und einen von dem Ankerabschnitt 202 beabstandeten Tragabschnitte 203 aufweist. Eine Turmwandung 1020 ist auf dem Tragabschnitt 203 angeordnet, der als eine Turmwandungsaufstandsfläche ausgebildet ist. Das Fundament 201 weist im Bereich des Ankerabschnitts 202 einen Fundamentkorb 200 mit Anschlusselemente 2001 auf, die sich von dem Fundamentkorb 200 aus dem Inneren des Fundaments 201 zu einer Oberfläche des Fundaments 201 erstrecken und in vertikaler Richtung aus dieser Oberfläche hervorstehen. Diese Anschlusselemente 2001 definieren den Ankerabschnitt 202 des Fundaments 201. Die Anschlusselemente 2001 sind hierbei ausgebildet, um mit einer Anschlusseinrichtung 2022 des Adapterelements 2020 zusammenzuwirken.

Das Adapterelement 2020 umfasst eine Anschlusseinrichtung 2022, die sich von einer Oberseite 2020b des Adapterelements 2020 zu einer Unterseite 2020a des Adapterelements 2020 erstreckt und als eine Art Durchgangsöffnung ausgebildet ist. Das Adapterelement 2020 ist hierbei derart auf dem Ankerabschnitt 202 platziert, dass die Anschlusselemente 2001 durch die Anschlusseinrichtung 2022 hindurchgeführt und an einer Oberseite 2020b des Adapterelements 2020 befestigt sind.

Das Adapterelement 2020 ist als ein Kegelstumpf ausgebildet und umfasst eine Seitenwand, die sich von der Unterseite 2020a des Adapterelements 2020 zu der Oberseite 2020a des Adapterelements 2020 erstreckt und einen von der Seitenwand radial nach innen vorstehenden Kragen 2025 umfasst. Die Seitenwand und der Kragen 2025 definieren einen Hohlraum im Inneren des Adapterelements. Dieser Hohlraum ist als ein Durchgang ausgebildet und erstreckt sich in vertikaler Richtung von der Oberseite 2020b des Adapterelements 2020 durch das Adapterelement 2020. Hierbei definiert der Hohlraum umfassend einen ersten Befestigungsabschnitt 2021a und einen zweiten Befestigungsabschnitt 2021b die Befestigungseinrichtung 2021. Die Seitenwand weist in etwa eine doppelt so große Höhe auf als der Kragen 2025. Der erste Befestigungsabschnitt 2021a erstreckt sich von der Oberseite 2020b des Adapterelements 2020 zu dem zweiten Befestigungsabschnitt 2021b und definiert einen Durchgang, der einen Durchmesser aufweist, um ein Durchführen der Spannelemente 303 zu ermöglichen. Der erste Befestigungsabschnitt 2021a ist hierbei von dem Kragen 2025 definiert. Der zweite Befestigungsabschnitt 2021b erstreckt sich zwischen dem ersten Befestigungsabschnitt 2021a und der Unterseite 2020a des Adapterelements 2020. Ein Durchmesser des zweiten Befestigungsabschnitts 2021b ist größer als ein Durchmesser des ersten Befestigungsabschnitts 2021a, um einen Anker 301, in welchem die Spannelemente 303 mittels Keilen 302 befestigt sind, zuverlässig zu verankern. In den Fig. 2, 3 und 4 sind jeweils zwei Spannelemente 303 durch den ersten Befestigungsabschnitt 2022a hindurchgeführt. Die Spannelemente 303 weisen je einen Keil 302 auf, um diese in einem Anker 301 zu verankern. Der zweite Befestigungsabschnitt 2022b weist hierbei eine Höhe auf, die größer ist als eine Höhe des Ankers 301 mit den darin befestigten Keilen 302.

Figur 2 zeigt eine externe Verspannung des Windenergieanlage-Turms in einem Inneren des Turms. Die in dem Adapterelement 2020 verankerten Spannelemente 303 erstrecken sich im Wesentlichen parallel zueinander in vertikaler Richtung von einem Adapterelement 2020 zu einem oberen Ende des Turms (hier nicht gezeigt).

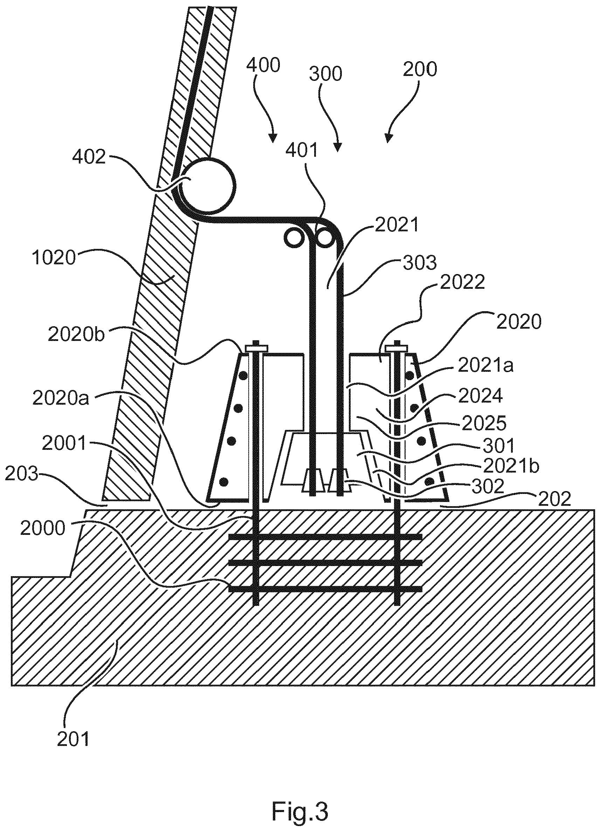

Anhand der Figur 3 wird die Ausgestaltung einer internen Verspannung gezeigt. Hierzu ist eine erste Umlenkeinheit 401 in vertikaler Richtung zentriert über der Befestigungseinrichtung und von dem Adapterelement beabstandet angeordnet. Diese Umlenkeinheit 401 ist ausgebildet, um das Spannelement 303, das in vertikaler Richtung aus der Oberseite 2020b des Adapterelements 2020 ragt umzulenken, sodass dieses um etwa 90° in Richtung der Turmwandung 1020 umgelenkt wird und sich horizontal in Richtung der Turmwandung 1020 erstreckt. Eine zweite Umlenkeinheit 402 ist an der Turmwandung 1020 angeordnet und erstreckt sich teilweise in ein Inneres der Turmwandung 1020, sodass das Spannelement 303 derart umgelenkt wird, dass es innerhalb der Turmwandung in Richtung des oberen Endes der Turmwandung (hier nicht gezeigt) verläuft. Hierbei erstreckt sich das Spannelement 303 im Wesentlichen parallel zu der äußeren Seite und der inneren Seite der Turmwandung 1020.

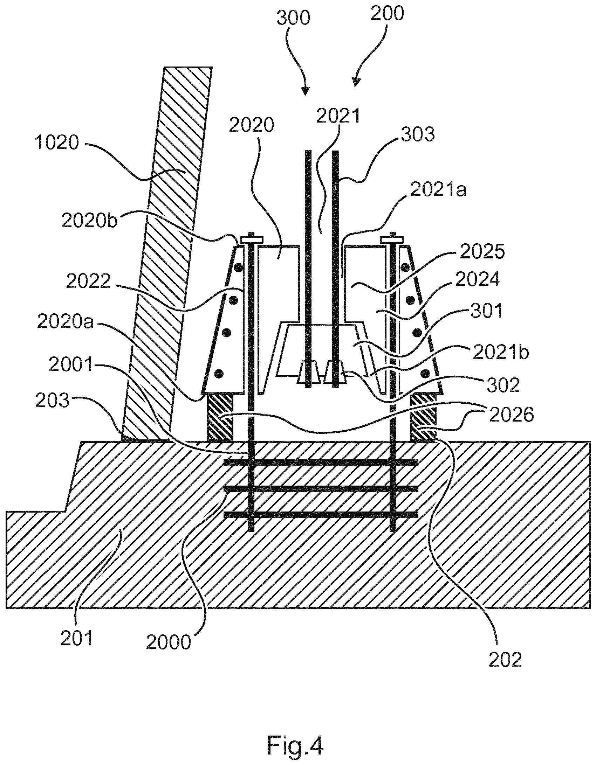

Figur 4 zeigt eine weitere Ausführungsvariante eine Fundamentanordnung 200. Der grundsätzliche Aufbau des Adapterelements entspricht dem Aufbau der in Figur 2 und 3 gezeigten Ausgestaltungen. Das Adapterelement 2020 ist hierbei auf einem Abstandshalter 2026 angeordnet. Eine Unterseite des Abstandshalters 2026 ist hierbei auf eine Oberseite des Ankerabschnitts 202 angeordnet, wobei die Unterseite 2020a des Adapterelements 2020 auf der Oberseite des Abstandshalters 2026 angeordnet ist. Diese Ausführungsvariante hat insbesondere bei einem Verfahren zum Vorspannen des Turms einen Vorteil. Nach Befestigen der Spannelemente 303 an einem unteren Ende und einem oberen Ende des Turms können die Abstandshalter 2026 beispielsweise entfernt oder verkleinert werden. Dadurch kann das Adapterelement 2020 in Schwerkraft Richtung, also in Richtung des Ankerabschnitts 202, bewegt und mittels der in der Anschlusseinrichtung 200 befestigten Anschlusselemente 2001 befestigt, sodass die Spannvorrichtung gespannt wird.

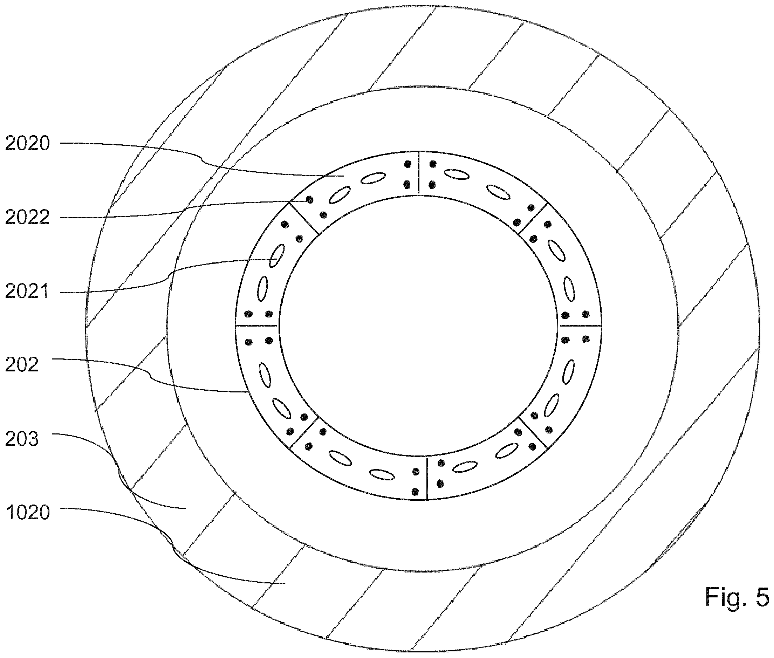

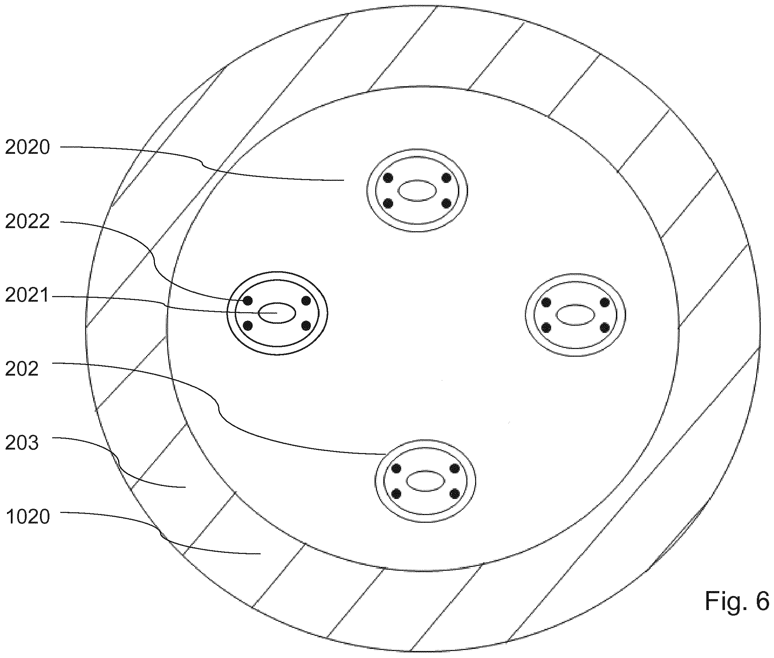

Die Figuren 5 und 6 zeigen jeweils unterschiedliche Anordnungsvarianten und Ausgestaltungsvarianten der Adapterelemente 2020 auf dem Ankerabschnitt 202, der innerhalb eines in sich geschlossenen umlaufenden Tragabschnitts 203 ausgebildet ist.

Figur 5 zeigt hierbei eine Ringanordnung bestehend aus mehreren einzelnen Adapterelementen 2020 in Form von Ringsegmenten. Diese Ringsegmente sind radial beabstandet von dem Tragabschnitt 203 angeordnet und derart zusammengesetzt, dass ein umlaufender Adapterring ausgebildet ist. Besonders bevorzugt kann jedes Ringsegment als ein Fertigteil oder ein Halbfertigteil hergestellt sein, sodass eine besonders einfache Montage ermöglicht wird. Die einzelnen Adapterelemente 2020 umfassen jeweils vier Anschlusseinrichtungen 2022 sowie zwei einzelne Befestigungseinrichtungen 2021.

In Figur 6 ist eine beispielhafte Ausgestaltung der Anordnung von vier Adapterelementen 2020 auf dem Ankerabschnitt 202 gezeigt. Der Ankerabschnitt 202 ist hierbei innerhalb des Tragabschnitts 203 ausgebildet. Die Adapterelemente 2020 sind als ein Kegelstumpf ausgebildet und radial von dem Tragabschnitt 203 beabstandet auf dem jeweiligen Ankerabschnitt 202 angeordnet. Die Adapterelemente 2020 sind im Wesentlichen gleichmäßig voneinander beabstandet. Gemäß dieser Ausführungsform umfasst jedes Adapterelement 2020 vier Anschlusseinrichtungen 2022 sowie eine Befestigungseinrichtung 2021.

Die Fundamentanordnung, das Adapterelement und das Fundament haben verschiedene Vorteile. Insbesondere können Adapterelemente kostengünstig hergestellt, insbesondere vorgefertigt, und gut transportiert werden. Ferner kann auch das Fundament flacher und weniger komplex hergestellt werden, sodass sowohl Arbeitszeit also auch Kosten eingespart werden können. Insbesondere kann auch eine Lebenszeit eines Windenergieanlagen-Turms verlängert werden, da Adapterelemente und/oder Spannelemente bei Beschädigungen einfach ausgetauscht werden können.

### Bezugszeichen

- 100: Windenergieanlage
- 102: Turm
- 104: Gondel
- 106: aerodynamischer Rotor
- 108: Rotorblätter
- 110: Spinner
- 200: Fundamentanordnung
- 201: Fundament
- 202: Ankerabschnitt
- 203: Tragabschnitt
- 300: Spannvorrichtung
- 301: Anker / Spannanker / Festanker
- 302: Keil
- 303: Spannelement
- 400: Umlenkeinrichtung
- 401: erste Umlenkeinheit
- 402: zweite Umlenkeinheit
- 1020: Turmwandung
- 2000: Fundamentkorb
- 2001: Anschlusselement
- 2020: Adapterelement
- 2020a: Unterseite
- 2020b: Oberseite
- 2021: Befestigungseinrichtung
- 2021a: erster Befestigungsabschnitt
- 2021b: zweiter Befestigungsabschnitt
- 2022: Anschlusseinrichtung
- 2024: Seitenwand
- 2025: Kragen
- 2026: Abstandshalter

## Patentansprüche

1. Verfahren zum Vorspannen eines Turms (102) einer Windenergieanlage (100), umfassend die Schritte:
- Bereitstellen einer Spannvorrichtung (300) mit einer Fundamentanordnung (200) und einem Spannelement (303),
∘ wobei die Fundamentanordnung (200) ein Fundament (201) umfasst mit einem Ankerabschnitt (202) und einem Tragabschnitt (203) zum Tragen einer Turmwandung (1020), und
∘ wobei die Fundamentanordnung (200) ein Adapterelement (2020) umfasst mit einer Befestigungseinrichtung (2021) zur Befestigung eines unteren Endes des Spannelements (303) zur Vorspannung des Turms (102) für die Windenergieanlage (100), und mit einer Anschlusseinrichtung (2022) zum Anschließen des Adapterelements (2020) an den Ankerabschnitt (202) des Fundaments (201),
- Befestigen eines unteren Endes des Spannelements (303) an einer Befestigungseinrichtung (2021) des Adapterelements (2020),
- Befestigen eines oberen Endes des Spannelements (303) an einem oberen Ende des Turms (102),
- Spannen des Spannelements (303) am unteren Ende des Spannelements (303) und/oder am oberen Ende des Spannelements (303),
- wobei das Spannen des Spannelements (303) durch Verkleinerung eines lichten Abstands zwischen dem Fundament (201) und dem Adapterelement (2020) erfolgt, und
- **dadurch gekennzeichnet, dass** zwischen dem Ankerabschnitt (202) und dem Adapterelement (2020) ein Abstandshalter (2026) eingesetzt ist.

2. Verfahren zum Vorspannen eines Turms (102) einer Windenergieanlage (100) nach Anspruch 1, **dadurch gekennzeichnet, dass** das Adapterelement (2020) ringförmig ausgebildet ist.

3. Verfahren zum Vorspannen eines Turms (102) einer Windenergieanlage (100) nach mindestens einem der vorhergehenden Ansprüche, **dadurch gekennzeichnet, dass** sich die Befestigungseinrichtung (2021) im Wesentlichen in vertikaler Richtung von einer Oberseite (2020b) des Adapterelements (2020) durch das Adapterelement (2020) (2020) erstreckt.

4. Verfahren zum Vorspannen eines Turms (102) einer Windenergieanlage (100) nach mindestens einem der vorhergehenden Ansprüche, **dadurch gekennzeichnet, dass** sich die Befestigungseinrichtung (2021) in ein Inneres des Adapterelements (2020) erstreckt.

5. Verfahren zum Vorspannen eines Turms (102) einer Windenergieanlage (100) nach mindestens einem der vorhergehenden Ansprüche, **dadurch gekennzeichnet, dass** der Ankerabschnitt (202) ein Anschlusselement (2001) umfasst, das ausgebildet ist, um mit der Anschlusseinrichtung (2022) zusammenzuwirken.

6. Verfahren zum Vorspannen eines Turms (102) einer Windenergieanlage (100) nach mindestens einem der vorhergehenden Ansprüche, **dadurch gekennzeichnet, dass**
- ein erster lichter Abstand zwischen einer Unterseite der Befestigungseinrichtung (2021) und dem Ankerabschnitt (202) derart bemessen ist, dass dort ein Anker (301) des Spannelements (303) anordenbar ist.

7. Verfahren zum Vorspannen eines Turms (102) einer Windenergieanlage (100) nach mindestens einem der vorhergehenden Ansprüche, **dadurch gekennzeichnet, dass**
- ein zweiter lichter Abstand zwischen einer Unterseite (2020a) des Adapterelements (2020) und dem Ankerabschnitt derart bemessen ist, dass dort ein Anker (301) des Spannelements (303) anordenbar ist.

8. Verfahren zum Vorspannen eines Turms (102) einer Windenergieanlage (100) nach mindestens einem der vorhergehenden Ansprüche, **dadurch gekennzeichnet, dass**
- ein zweiter lichter Abstand zwischen einer Unterseite (2020a) des Adapterelements (2020) und dem Ankerabschnitt derart bemessen ist, dass dort ein Spannwerkzeug zum Spannen des Spannelements (303) anordenbar ist.

9. Verfahren zum Vorspannen eines Turms (102) einer Windenergieanlage (100) nach mindestens einem der vorhergehenden Ansprüche, umfassend eine Umlenkeinrichtung (400) zum Umlenken eines Spannelements (303) in Richtung der Befestigungseinrichtung (2021).

## Claims

1. A method for pretensioning a tower (102) of a wind power installation (100), comprising the steps:
- providing a tensioning device (300) having a foundation arrangement (200) and a tensioning element (303),
∘ wherein the foundation arrangement (200) comprises a foundation (201) having an anchor portion (202) and a support portion (203) for supporting a tower wall (1020), and
∘ wherein the foundation arrangement (200) comprises an adapter element (2020) having a fastening means (2021) for fastening a lower end of the tensioning element (303) for pretensioning a tower (102) for the wind power installation (100), and a connection means (2022) for connecting the adapter element (2020) to the anchor portion (202) of the foundation (201),
- fastening a lower end of the tensioning element (303) to a fastening means (2021) of the adapter element (2020),
- fastening an upper end of the tensioning element (303) to an upper end of the tower (102),
- tensioning the tensioning element (303) at the lower end of the tensioning element (303) and/or at the upper end of the tensioning element (303),
- wherein the tensioning of the tensioning element (303) is effected by reduction of a clearance between the foundation (201) and the adapter element (2020), and
- **characterized in that** a spacer (2026) is inserted between the anchor portion (202) and the adapter element (2020).

2. The method for tensioning a tower (102) of a wind power installation (100) as claimed in claim 1, **characterized in that** the adapter element (2020) is annular.

3. The method for tensioning a tower (102) of a wind power installation (100) as claimed in at least one of the preceding claims, **characterized in that** the fastening means (2021) extends substantially in a vertical direction from an upper side (2020b) of the adapter element (2020) through the adapter element (2020) (2020).

4. The method for tensioning a tower (102) of a wind power installation (100) as claimed in at least one of the preceding claims, **characterized in that** the fastening means (2021) extends into an interior of the adapter element (2020).

5. The method for tensioning a tower (102) of a wind power installation (100) as claimed in at least one of the preceding claims, **characterized in that** the anchor portion (202) comprises a connection element (2001) that is designed to act in combination with the connection means (2022).

6. The method for tensioning a tower (102) of a wind power installation (100) as claimed in at least one of the preceding claims, **characterized in that**
- a first clearance between an underside of the fastening means (2021) and the anchor portion (202) is dimensioned in such a manner that an anchor (301) of the tensioning element (303) can be arranged there.

7. The method for tensioning a tower (102) of a wind power installation (100) as claimed in at least one of the preceding claims, **characterized in that**
- a second clearance between an underside (2020a) of the adapter element (2020) and the anchor portion is dimensioned in such a manner that an anchor (301) of the tensioning element (303) can be arranged there.

8. The method for tensioning a tower (102) of a wind power installation (100) as claimed in at least one of the preceding claims, **characterized in that**
- a second clearance between an underside (2020a) of the adapter element (2020) and the anchor portion is dimensioned in such a manner that a tensioning tool for tensioning the tensioning element (303) can be arranged there.

9. The method for tensioning a tower (102) of a wind power installation (100) as claimed in at least one of the preceding claims, comprising a deflection means (400) for deflecting a tensioning element (303) in the direction of the fastening means (2021).

## Revendications

1. Procédé de préserrage d'une tour (102) d'une éolienne (100), comprenant les étapes suivantes :
- la fourniture d'un dispositif de serrage (300) avec un agencement de fondation (200) et un élément de serrage (303),
-- dans lequel l'agencement de fondation (200) comporte une fondation (201) avec une section d'ancrage (202) et une section porteuse (203) pour porter une paroi de tour (1020), et
-- dans lequel l'agencement de fondation (200) comporte un élément adaptateur (2020) avec un dispositif de fixation (2021) pour la fixation d'une extrémité inférieure de l'élément de serrage (303) pour le préserrage de la tour (102) pour l'éolienne (100), et avec un dispositif de raccordement (2022) pour le raccordement de l'élément adaptateur (2020) à la section d'ancrage (202) de la fondation (201),
- la fixation d'une extrémité inférieure de l'élément de serrage (303) à un dispositif de fixation (2021) de l'élément adaptateur (2020),
- la fixation d'une extrémité supérieure de l'élément de serrage (303) à une extrémité supérieure de la tour (102),
- le serrage de l'élément de serrage (303) à l'extrémité inférieure de l'élément de serrage (303) et/ou à l'extrémité supérieure de l'élément de serrage (303),
- dans lequel le serrage de l'élément de serrage (303) est effectué par la diminution d'une distance libre entre la fondation (201) et l'élément adaptateur (2020), et
- **caractérisé en ce qu'**un élément d'écartement (2026) est inséré entre la section d'ancrage (202) et l'élément adaptateur (2020).

2. Procédé de préserrage d'une tour (102) d'une éolienne (100) selon la revendication 1, **caractérisé en ce que** l'élément adaptateur (2020) est réalisé en forme d'anneau.

3. Procédé de préserrage d'une tour (102) d'une éolienne (100) selon au moins l'une quelconque des revendications précédentes, **caractérisé en ce que** le dispositif de fixation (2021) s'étend sensiblement dans le sens vertical d'un côté supérieur (2020b) de l'élément adaptateur (2020) à travers l'élément adaptateur (2020) (2020).

4. Procédé de préserrage d'une tour (102) d'une éolienne (100) selon au moins l'une quelconque des revendications précédentes, **caractérisé en ce que** le dispositif de fixation (2021) s'étend dans une partie intérieure de l'élément adaptateur (2020).

5. Procédé de préserrage d'une tour (102) d'une éolienne (100) selon au moins l'une quelconque des revendications précédentes, **caractérisé en ce que** la section d'ancrage (202) comporte un élément de raccordement (2001) qui est réalisé afin de coopérer avec le dispositif de raccordement (2022).

6. Procédé de préserrage d'une tour (102) d'une éolienne (100) selon au moins l'une quelconque des revendications précédentes, **caractérisé en ce que**
- une première distance libre entre un côté inférieur du dispositif de fixation (2021) et la section d'ancrage (202) est dimensionnée de telle manière qu'un ancrage (301) de l'élément de serrage (303) puisse y être agencé.

7. Procédé de préserrage d'une tour (102) d'une éolienne (100) selon au moins l'une quelconque des revendications précédentes, **caractérisé en ce que**
- une seconde distance libre entre un côté inférieur (2020a) de l'élément adaptateur (2020) et la section d'ancrage est dimensionnée de telle manière qu'un ancrage (301) de l'élément de serrage (303) puisse y être agencé.

8. Procédé de préserrage d'une tour (102) d'une éolienne (100) selon au moins l'une quelconque des revendications précédentes, **caractérisé en ce que**
- une seconde distance libre entre un côté inférieur (2020a) de l'élément adaptateur (2020) et la section d'ancrage est dimensionnée de telle manière qu'un outil de serrage puisse y être agencé pour le serrage de l'élément de serrage (303).

9. Procédé de préserrage d'une tour (102) d'une éolienne (100) selon au moins l'une quelconque des revendications précédentes, comprenant au moins un dispositif de déviation (400) pour la déviation d'un élément de serrage (303) en direction du dispositif de fixation (2021).
